(19) Europäisches Patentamt
European Patent Office
Office européen des brevets

(11) Veröffentlichungsnummer: **0 234 436 B1**

# (12) EUROPÄISCHE PATENTSCHRIFT

(45) Veröffentlichungstag der Patentschrift: **31.03.93**

(51) Int. Cl.5: **C07C 69/003**, C07C 69/753, C07C 69/76, C07C 69/773, C09K 19/30, C09K 19/20, C07C 69/92

(21) Anmeldenummer: **87102007.9**

(22) Anmeldetag: **13.02.87**

## (54) Chirale Umsetzungsprodukte aus mesogenen Molekülbausteinen und bifunktionell reaktionsfähigen Alkandiolderivaten und ihre Verwendung als Dotierstoff in Flüssigkristall-Phasen.

(30) Priorität: **17.02.86 DE 3604902**
**06.10.86 DE 3633967**

(43) Veröffentlichungstag der Anmeldung:
**02.09.87 Patentblatt 87/36**

(45) Bekanntmachung des Hinweises auf die Patenterteilung:
**31.03.93 Patentblatt 93/13**

(84) Benannte Vertragsstaaten:
**DE**

(56) Entgegenhaltungen:
**EP-A- 0 138 006**
**EP-A- 0 233 602**
**DE-A- 3 617 826**

(73) Patentinhaber: **HOECHST AKTIENGESELLSCHAFT**
**Postfach 80 03 20**
**W-6230 Frankturt am Main 80(DE)**

(72) Erfinder: **Scherowsky, Prof. Dr. Günter**
**Winklerstrasse 18B**
**W-1000 Berlin 33(DE)**
Erfinder: **Lötzsch, Detlef**
**Lessingstrasse 10**
**W-1000 Berlin 21(DE)**

EP 0 234 436 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Kennlinien der in Flüssigkristall-Displays verwendeten elektro-optischen Effekte verändern sich im allgemeinen mit der Temperatur. Insbesondere bei einer Ansteuerung im Multiplexbetrieb ergeben sich daraus Schwierigkeiten, die zu einer unerwünschten Einschränkung des Arbeitstemperaturbereiches führen können. Bei verschiedenen elektrooptischen Effekten kann durch Zusatz chiraler Verbindungen zum nematischen Flüssigkristall über die Temperaturfunktion der Ganghöhe der dadurch induzierten cholesterischen Helixstruktur die Temperaturabhängigkeit der elektrooptischen Kennlinien vorteilhaft beeinflußt werden, so beim cholesterisch-nematischen Phasenumwandlungseffekt, der TN("twisted nematic")-Zelle und dem kürzlich vorgestellten SBE ("supertwisted birefringence effect"). Die üblichen bekannten Dotierstoffe induzieren im allgemeinen eine mit zunehmender Temperatur ansteigende Ganghöhe; es sind in jüngster Zeit auch bereits Dotierstoffe beschrieben worden, die diesen oftmals unerwünschten Effekt nicht zeigen.

Aus der DE-C 28 27 471 (= US-A 4 264 148) ist der Zusatz von zwei unterschiedlichen chiralen Dotierstoffen zu nematischen Trägersubstanzen bekannt; dabei erzeugt der eine chirale Dotierstoff in der nematischen Trägersubstanz eine rechtshändige Verdrillung, der andere eine linkshändige Verdrillung. Mit einer solchen Dotierung wird eine Abnahme der Ganghöhe erreicht, aber es sind zur Erreichung dieses Effekts relativ hohe Gesamtkonzentrationen erforderlich, die zu einer negativen Beeinflussung der anderen Materialparameter führen können.

In der DE-A 33 33 677 werden u.a. Umsetzungsprodukte (Ester) von chiralem Butandiol-(2,3) mit mesogenen Carbonsäuren beschrieben, die bereits in Einzeldosierung in Flüssigkristall-Phasen die Optimierung der Temperaturkompensation vereinfachen können. Diese bekannten Ester weisen aber oftmals ein für bestimmte Anwendungen noch zu niedriges Verdrillungsvermögen auf. Die Butandiole sollen auch so aufgebaut sein können, daß sich zwischen den beiden chiralen Zentren Alkylengruppen befinden können; es wird aber keine konkrete Verbindung genannt oder beschrieben.

Aufgabe der vorliegenden Erfindung ist es deshalb, neue Verbindungen aufzufinden, die bei ihrem Einsatz als chirale Dotierstoffe in Flüssigkristall-Phasen bei verhältnismäßig geringen Zusatzmengen einzeln oder im Gemisch bereits eine Optimierung der Temperaturkompensation und gleichzeitig eine starke Verdrillung der Flüssigkristall-Phasen bewirken; außerdem soll es möglich sein, ausgehend von einer vergleichbaren Grundstruktur, durch kleinere Molekülvariationen das Molekül in seinen Eigenschaften in einer bestimmten Richtung zu verändern.

Die Erfindung geht aus von den bekannten Verbindungen aus einem Molekülbaustein mit ein- oder zwei Chiralitätszentren und mindestens einem mesogenen Molekülbaustein. Die erfindungsgemäßen Verbindungen sind gekennzeichnet durch die allgemeine Formel (I) eines Alkandiol-Derivates

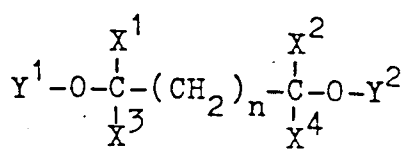

(I)

in der die Symbole folgende Bedeutung haben:

$Y^1$ = H oder MC-CO, wobei MC den Molekülrest einer mesogenen Carbonsäure mit der allgemeinen Formel II darstellt,

$R\text{-}(A^1\text{-})_{n1}(B\text{-})_{n2}(A^2\text{-})_{n3}$ (II)

in der die Symbole folgende Bedeutung haben:

R = ein geradkettiges oder verzweigtes $(C_1\text{-}C_{12})$Alkyl, wobei eine oder zwei nicht-benachbarte $CH_2$-Gruppen durch O-Atome ersetzt sein können, oder falls n1 = 1 auch F, Cl, Br oder CN

$A^1$,$A^2$ = unabhängig voneinander 1,4-Phenylen, Diazin-2,5-diyl, Diazin-3,6-diyl, 1,4-Cyclohexylen, 1,3-Dioxan-2,5-diyl, 1,3-Dithian-2,5-diyl oder 1,4-Bicyclo(2,2,2)octylen, wobei diese Gruppen auch mindestens einfach substituiert sein können durch F, Cl, Br, CN und/oder $(C_1\text{-}C_{12})$Alkyl, wobei in der Alkylgruppe ein oder zwei nicht-benachbarte $CH_2$-Gruppen durch O Atome ersetzt sein können,

B = CO-O, O-CO, $CH_2\text{-}CH_2$, $OCH_2$, $CH_2O$, CH = N, N = CH, N = N, N(O) = N,

n1,n2,n3 = unabhängig voneinander 0, 1, oder 2, wobei n1 und n3 nicht gleichzeitig O sind.

n = 1 oder 2,

$Y^2$ = MC-CO, wobei MC die obengenannte Bedeutung hat,
$X^1$,$X^2$ = unabhängig voneinander H oder ($C_1$-$C_5$)Alkyl, wobei $X^1$ und $X^2$ nicht gleichzeitig H sind, und
$X^3$,$X^4$ = unabhängig voneinander H oder ($C_1$-$C_2$)Alkyl.

Die genannten Verbindungen sind ein- oder zweifach an den OH-Gruppen veresterte insbesondere symmetrisch aufgebaute Alkandiol-Derivate, bei denen sich zwischen den eine OH-Gruppe oder eine Estergruppe tragenden C-Atomen eine oder zwei Methylengruppen befinden, z.B. sind dies Pentan-2,4-diol, Hexan-2,5-diol-, Butan-1,3-diol- oder Heptan-3,5-diol-Derivate.

Eine weitere Lösung der gestellten Aufgabe ist eine verdrillbare Flüssigkristall-Phase mit einem Gehalt an mindestens einer chiralen Verbindung, die dadurch gekennzeichnet ist, daß sie als chirale Verbindung mindestens eine Verbindung der allgemeinen Formel (I) enthält. Unter dem Begriff "verdrillbare Flüssigkristall-Phase" sind nematische, cholesterische, geneigt("tilted")-smektische, insbesondere smektisch C ($S_c$ oder SmC), Phasen zu verstehen.

Die erfindungsgemäßen verdrillbaren Flüssigkristallphasen bestehen aus 2 bis 20, vorzugsweise 2 bis 15 Komponenten, darunter mindestens einem der erfindungsgemäß beanspruchten chiralen Dotierstoffe. Die anderen Bestandteile werden vorzugsweise ausgewählt aus den bekannten Verbindungen mit nematischen, cholesterischen und/oder geneigtsmektischen Phasen, dazu gehören beispielsweise Schiffsche Basen, Biphenyle, Terphenyle, Phenylcyclohexane, Cyclohexylbiphenyle, Pyrimidine, Zimtsäureester, Cholesterinester, verschieden überbrückte, terminal-polare mehrkernige Ester von p-Alkylbenzoesäuren. Im allgemeinen liegen die im Handel erhältlichen Flüssigkristall-Phasen bereits vor der Zugabe des chiralen Dotierstoffes als Gemische verschiedenster Komponenten vor, vor denen mindestens eine mesogen ist, d.h. als Verbindung, in derivatisierter Form oder im Gemisch mit bestimmten Cokomponenten eine Flüssigkristall-Phase zeigt [= mindestens eine enantiotrope (Klärtemperatur>Schmelztemperatur) oder monotrope (Klärtemperatur<Schmelztemperatur) Mesophasenbildung erwarten läßt].

Mit Hilfe der neu-entwickelten Verbindungen als Dotierstoff gelingt es bei geringer Menge an Dotierstoff in Flüssigkristall-Phasen eine hohe Verdrillung zu erzielen, wobei die Verbindungen einzeln oder im Gemisch außerdem eine bei Temperaturänderung im wesentlichen unabhängige Ganghöhe aufweisen können, d.h. die Zu-oder Abnahme der Ganghöhe liegt im allgemeinen im Bereich von 1 % bis 1 ‰ pro K. Die bisher synthetisierten Verbindungen weisen in allen Fällen bei steigender Temperatur eine Zunahme der HTP auf, d.h. die Ganghöhe der induzierten Helixstruktur nimmt ab; bei etwa -5 °C findet bei einigen Verbindungen auch eine Helixinversion statt. Ein weiterer Einsatz der erfindungsgemäßen Verbindungen kann bei der Thermotopographie oder zur Erzeugung von "blue phases" (=cholesterische Systeme mit relativ kleiner Ganghöhe von z.B. weniger als 800 nm) erfolgen.

Unter den Verbindungen der allgemeinen Formel (I) sind die bevorzugt, bei denen die Symbole folgende Bedeutung haben: R= geradkettiges ($C_3$-$C_{10}$)Alkyl, wobei eine $CH_2$-Gruppe durch ein O-Atom ersetzt sein kann, $A^1$,$A^2$= unabhängig voneinander unsubstituiertes 1,4-Phenylen, Diazin-2,5-diyl oder 1,4-Cyclohexylen, B= CO-O oder O-CO, n1= 1, n2= 0 oder 1, und n3= 1 oder 2.

In der allgemeinen Formel (I) werden darüber hinaus die Verbindungen bevorzugt, bei denen die Symbole folgende Bedeutung haben:

$X^1$ = $X^2$ = ($C_1$-$C_2$)Alkyl, $Y^1$ = $Y^2$ = MC-CO, $X^3$=$X^4$=H und n= 1

Von der oder den erfindungsgemäßen Dotierstoffen enthalten die Flüssigkristall-Phasen im allgemeinen 0,01 bis 70 Gew.-%, insbesondere 0,05 bis 50 Gew.-%.

## Beispiele

### Allgemeine Arbeitsvorschrift zur Herstellung der Verbindungen 1 bis 9

Zu 1 mmol des optisch aktiven Alkandiols (z.B. des R,R-(+)-2,4-Pentandiols, des R,R-(+)-2,5-Hexandiols, des R-1,3-Butandiols oder des R-2-Methyl-2,4-pentandiols) in 10 bis 50 ml wasserfreiem Methylenchlorid oder Dimethylformamid werden unter Rühren 10 bis 40 mg Dimethylaminopyridin und 1,5 mmol der mesogenen Carbonsäure zugegeben. Bei einer Temperatur von 0 °C werden 1,5 mmol Dicyclohexylcarbodiimid hinzugefügt, und es wird während 10 min bei dieser Temperatur und dann 20 h bei Raumtemperatur gerührt. Es wird von ausgefallenem Harnstoff abfiltriert, das Filtrat wird im Vakuum eingedampft und der verbleibende Rückstand wird in Methylenchlorid aufgenommen. Nach eventueller Filtration wird das organische Lösemittel abgezogen und der Rückstand an Kieselgel chromatographiert. Nach dieser Vorschrift werden folgende Verbindungen synthetisiert, deren Strukturen durch spektroskopische Daten und Elemen-

taranalysen gesichert sind:

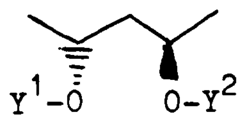

(1) $Y^1 = Y^2$ :

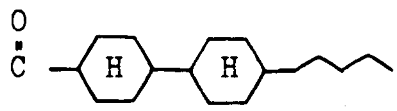

R,R-2,4-Bis-(4′-trans-n-pentyl-4-trans-dicyclohexyl-carbonyloxy)-pentan

(2) $Y^1$ = H $Y^2$ =

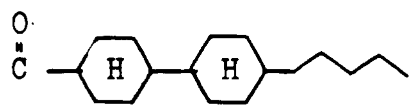

R,R-2-Hydroxy-4-(4′-trans-n-pentyl-4-trans-dicyclohexyl-carbonyloxy)-pentan

(3) $Y^1$ =

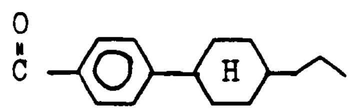

$Y^2$ =

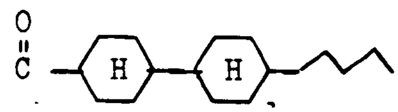

R,R-2-[4-(trans-4-n-Propyl-cyclohexyl)-benzoyloxy]-4-(4′-trans-n-pentyl-4-trans-dicyclohexyl-carbonyloxy)-pentan

(4) $Y^1$ = H $Y^2$ =

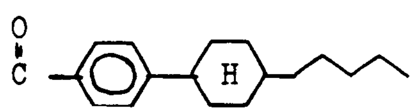

R,R-2-Hydroxy-4-[4-(trans-4-n-pentyl-cyclohexyl)-benzoyloxy]-pentan

(7) $Y^1 = Y^2$:

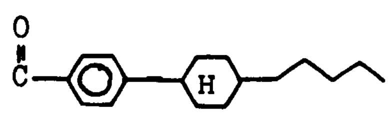

R,R-2,4-Bis-[4-(trans-4-n-pentyl-cyclohexyl)-benzoyloxy]-pentan

(8) $Y^1 = Y^2$:

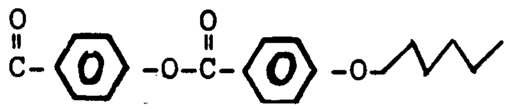

R,R'-2,4-Bis-[4-(4-n-hexyloxy-benzoyloxy)-benzoyloxy]-pentan

(9)

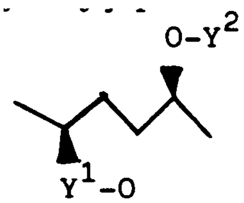

$Y^1 = Y^2$:

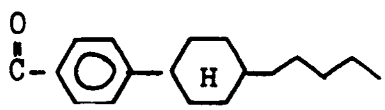

R,R-2,5-Bis-[4-(trans-4-n-pentyl-cyclohexyl)-benzoyloxy]-hexan

Tabelle

| Verbindungs-Nr. | Temperaturintervall der Messung des Verdrillungsvermögens (°C) | Verdrillungsvermögen p•c (µm•Gew.-%) | Schmelzpunkt (°C) |
|---|---|---|---|
| 1 | 10 - 100 | 1130 → 204 | 103-105 |
| 2 | 2 - 100 | 480 → 52 | 75 |
| 3 | 0 - 98 | 83 → 13 | 58-61 |
| 4 | - | - | 52-54 |
| 7 | 9 - 88 | 85 → 17 | 98-100 |
| 8*) | 10 - 99 | -38 → +70 | 143-144 |
| 9 | 10 - 100 | 14 → 29 | 95 |

*) mit cholesterischer Phase bei 115.8°C und der
Inversionstemperatur bei 78°C

Weitere erfindungsgemäße Verbindungen sind:

(5)

(Schmp.: 16°C)

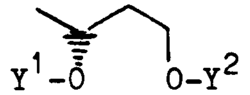

$Y^1=Y^2$:

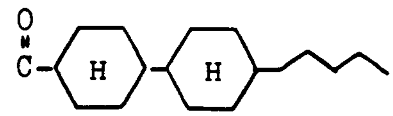

R-1,3-Bis(4'-trans-n-pentyl-4-trans-dicyclohexyl-carbonyloxy)-butan

(6)

(Schmp.: 89°C)

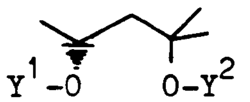

$Y^1=Y^2$:

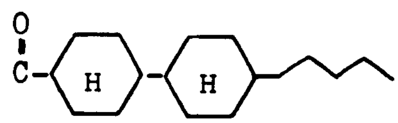

R-2-Methyl-2,4-bis-(4'-trans-n-pentyl-4-trans-dicyclohexyl-carbonyloxy)-pentan

Die Messung des Verdrillungsvermögens wird in einer handelsüblichen nematischen Weitbereichsmischung -"RO-TN 404" der Hoffmann-La Roche Aktiengesellschaft (Basel/Schweiz)-mit einem Klärpunkt von 104 ° C durchgeführt.

In der anliegenden Zeichnung sind die HTP-Werte in Abhängigkeit von der Temperatur für verschiedene der erfindungsgemäßen Verbindungen aufgetragen.

- HTP ("helical twisting power") = 1/p•c (p-Ganghöhe der induzierten Helixstruktur in µm, c = Konzentration des chiralen Dotierstoffes in Gew.-%)

Vergleicht man nach der Tabelle und/oder in der Zeichnung den Kurvenverlauf der HTP-Werte der Verbindungen 1 bis 3 miteinander, so sieht man, daß alle eine steigende HTP bei zunehmender Temperatur induzieren, unabhängig von der Art des Substituenten Y. Wird bei der Verbindung 5 eine Methylgruppe unter Verlust eines Asymmetriezentrums weggenommen, so steigt die HTP in stärkerem Maß, bei Zusatz einer Methylgruppe in der Verbindung 6 (ebenfalls unter Verlust eines Asymmetriezentrums) kehren sich der Helixdrehsinn, jedoch nicht das Vorzeichen der Temperaturfunktion der HTP um. Bei dem Auftreten einer weiteren $CH_2$-Gruppe zwischen den Asymmetriezentren in der Verbindung 9 tritt eine fallende HTP bei zunehmender Temperatur auf. Die Verbindung 8 zeigt Helixinversion.

## Patentansprüche

**1.** Verbindungen aus einem Molekülbaustein mit einem oder zwei Chiralitätszentren und mindestens einem mesogenen Molekülbaustein gekennzeichnet durch die allgemeine Formel (I), eines Alkandiol-Derivates

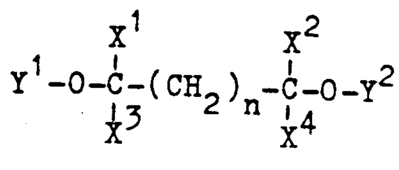

(I)

in der die Symbole folgende Bedeutung haben:

$Y^1$ = H oder MC-CO, wobei MC den Molekülrest einer mesogenen Carbonsäure mit der allgemeinen Formel II darstellt,

$$R\text{-}(A^1\text{-})_{n1}(B\text{-})_{n2}(A^2\text{-})_{n3} \quad (II)$$

in der die Symbole folgende Bedeutung haben:

R = ein geradkettiges oder verzweigtes ($C_1$-$C_{12}$)Alkyl, wobei eine oder zwei nicht-benachbarte $CH_2$-Gruppen durch O-Atome ersetzt sein können, oder falls n1 = 1 auch F, Cl, Br oder CN

$A^1$,$A^2$ = unabhängigvoneinander 1,4-Phenylen, Diazin-2,5-diyl, Diazin-3,6-diyl, 1,4-Cyclohexylen, 1,3-Dioxan-2,5-diyl, 1,3-Dithian-2,5-diyl oder 1,4-Bicyclo(2,2,2)octylen, wobei diese Gruppen auch mindestens einfach substituiert sein können durch F, Cl, Br, CN und/oder ($C_1$-$C_{12}$)Alkyl, wobei in der Alkylgruppe ein oder zwei nicht-benachbarte $CH_2$-Gruppen durch O Atome ersetzt sein können,

B = CO-O, O-CO, $CH_2$-$CH_2$, $OCH_2$, $CH_2O$, CH = N, N = CH, N = N, N(O) = N,

n1,n2,n3 = unabhängig voneinander 0, 1, oder 2, wobei n1 und n3 nicht gleichzeitig O sind.

n = 1 oder 2,

$Y^2$ = MC-CO, wobei MC die obengenannte Bedeutung hat,

$X^1$,$X^2$ = unabhängig voneinander H oder ($C_1$-$C_5$)Alkyl, wobei $X^1$ und $X^2$ nicht gleichzeitig H sind, und

$X^3$,$X^4$ = unabhängig voneinander H oder ($C_1$-$C_2$)Alkyl.

**2.** Verdrillbare Flüssigkristall-Phase mit einem Gehalt an mindestens einer chiralen Verbindung, dadurch gekennzeichnet, daß sie mindestens eine chirale Verbindung gemäß der allgemeinen Formel (I) nach Anspruch 1 enthält.

**3.** Flüssigkristall-Phase nach Anspruch 2, dadurch gekennzeichnet, daß sie 0,01 bis 70 Gew.-% an mindestens einer der chiralen Verbindungen enthält.

**4.** Flüssigkristall-Anzeigeelement enthaltend eine Flüssigkristall-Phase nach Anspruch 2.

**5.** Verwendung einer chiralen Verbindung gemäß der allgemeinen Formel (I) nach Anspruch 1 zur Temperaturkompensation und Erzeugung einer Verdrillung in Flüssigkristall-Phasen.

**6.** Verfahren zur Temperaturkompensation und Verdrillung in Flüssigkristall-Anzeigeelementen, die eine Flüssigkristall-Phase enthalten, durch Zusatz von mindestens einer chiralen Verbindung, dadurch gekennzeichnet, daß man der Flüssigkristall-Phase 0,01 bis 70 Gew.-% mindestens eine Verbindung gemäß der allgemeinen Formel (I) nach Anspruch 1 zusetzt.

## Claims

**1.** A compound comprising a molecular structural element with one or two chirality centers and at least one mesogenic molecular structural element which is defined by the formula (I) of an alkanediol derivative

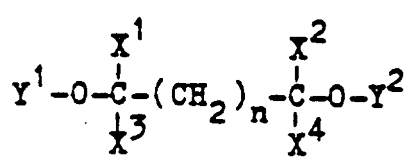

(I)

in which the symbols have the following meanings:

$Y^1$ = H or MC-CO, MC being the molecular radical of a mesogenic carboxylic acid expressed by the formula (II)

$$R\text{-}(A^1\text{-})_{n1}(B\text{-})_{n2}(A^2\text{-})_{n3} \quad (II)$$

in which the symbols have the following meanings:

R = a straight-chain or branched ($C_1$-$C_{12}$) alkyl, it being possible for one or two non-adjacent $CH_2$ groups to be replaced by 0 atoms, or if n1 = 1 also F, Cl, Br or CN,

$A^1$, $A^2$ = independently of each other, 1,4-phenylene, diazine-2,5-diyl, diazine-3,6-diyl, 1,4-

| | |
|---|---|
| | cyclohexylene, 1,3 dioxane-2,5-diyl, 1,3-dithiane-2,5-diyl or 1,4-bicyclo[2.2.2]-octylene, it being possible for these groups also to be substituted at least singly by F, Cl, Br, CN and/or ($C_1$-$C_{12}$)alkyl, it being possible for one or two nonadjacent $CH_2$ groups to be replaced by O atoms, |
| B = | CO-O, O-CO, $CH_2$-$CH_2$, $OCH_2$, $CH_2O$, CH = N, N = CH, N = N, N(O) = N, |
| n1, n2, n3 = | independently of each other, 0, 1 or 2, n1 and n3 not being 0 at the same time, |
| n = | 1 or 2, |
| $Y^2$ = | MC-CO, MC having the abovementioned meaning, |
| $X^1$, $X^2$ = | independently of each other, H or ($C_1$-$C_5$)-alkyl, $X^1$ and $X^2$ not being H at the same time, and |
| $X^3$, $X^4$ = | independently of each other, H or ($C_1$-$C_2$)-alkyl. |

**2.** A twistable liquid crystal phase containing at least one chiral compound, wherein the phase contains at least one chiral compound of the formula (I) as claimed in claim 1.

**3.** A liquid crystal phase as claimed in claim 2, wherein the phase contains 0.01 to 70% by weight of at least one of the chiral compounds.

**4.** A liquid crystal display element containing a liquid crystal phase as claimed in claim 2.

**5.** The use of a chiral compound according to the formula (I) as claimed in claim 1 for temperature compensation and producing twisting in liquid crystal phases.

**6.** A method for temperature compensation and twisting in liquid crystal display elements containing a liquid crystal phase by adding at least one chiral compound, wherein 0.01 to 70% by weight of at least one compound according to the formula (I) as claimed in claim 1 is added to the liquid crystal phase.

## Revendications

**1.** Composés d'un élément structural moléculaire ayant un ou deux centres de chiralité et d'un ou de plusieurs éléments structuraux mésogènes, caractérisés par la formule générale I ci-dessous, d'un dérivé d'alcane-diol :

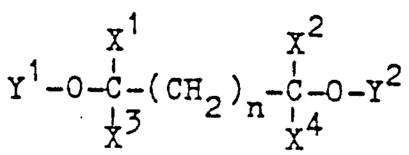

(I),

formule dans laquelle les divers symboles ont les significations suivantes :

| | |
|---|---|
| $Y^1$ | représente H ou un groupe MC-CO, MC désignant le radical d'un acide carboxylique mésogène de formule générale II : |
| | $R\text{-}(A'\text{-})_{n1}(B\text{-})_{n2}(A^{2\text{-}})_{n3}$ (II) |
| | dans laquelle |
| R | représente un alkyle en $C_1$-$C_{12}$ linéaire ou ramifié, dont un ou deux groupes $CH_2$ non voisins peuvent être remplacés par des atomes d'oxygène, ou bien, si n1 = 1, également F, Cl, Br ou CN, |
| $A^1$ et $A^2$ | sont chacun, indépendamment l'un de l'autre, un groupe 1,4-phénylène, diazine-2,5-diyle, diazine-3,6-diyle, 1,4-cyclohexylène, 1,3-dioxane-2,5-diyle, 1,3-dithiane-2,5-diyle ou 1,4-bicyclo(2,2,2)octylène, groupes qui peuvent avoir comme substituants un ou plusieurs atomes de fluor, chlore ou brome ou groupes CN et/ou alkyles en $C_1$-$C_{12}$, alkyles dont un ou deux groupes $CH_2$ non voisins peuvent être aussi remplacés par des atomes d'oxygène, |
| B | représente un groupe CO-O, O-CO, $CH_2$-$CH_2$, $OCH_2$, $CH_2O$, CH = N, N = CH, N = N |

| | |
|---|---|
| | ou N(O) = N et |
| n1, n2 et n3 | sont chacun, indépendamment l'un de l'autre, le nombre 0, 1 ou 2, mais n1 et n3 n'étant pas tous les deux nuls à la fois, |
| n | est le nombre 1 ou 2, |
| $Y^2$ | un groupe MC-CO, MC ayant la signification ci-dessus, |
| $X^1$ et $X^2$ | désignent chacun, indépendamment l'un de l'autre, H ou un alkyle en $C_1$-$C_5$, mais pas tous les deux l'hydrogène en même temps, et |
| $X^3$ et $X^4$ | chacun, indépendamment l'un de l'autre, H ou un alkyle en $C_1$-$C_2$. |

**2.** Phase de cristaux liquides transposable contenant au moins un composé chiral, caractérisée en ce qu'elle comprend au moins un composé chiral de formule générale I selon la revendication 1.

**3.** Phase de cristaux liquides selon la revendication 2, caractérisée en ce qu'elle comprend de 0,01 à 70 % en poids d'au moins un composé chiral de formule I.

**4.** Elément d'affichage (visualisation) à cristaux liquides comprenant une phase de cristaux liquides selon la revendication 2.

**5.** Emploi d'un composé chiral de formule I selon la revendication 1 pour une compensation de température et formation d'une torsade dans des phases de cristaux liquides.

**6.** Procédé de compensation de température et de transposition dans des éléments d'affichage à cristaux liquides comprenant une phase de cristaux liquides, par addition d'au moins un composé chiral, procédé caractérisé en ce que l'on ajoute à la phase de cristaux liquides de 0,01 à 70 % en poids d'un ou de plusieurs composés de formule générale I selon la revendication 1.

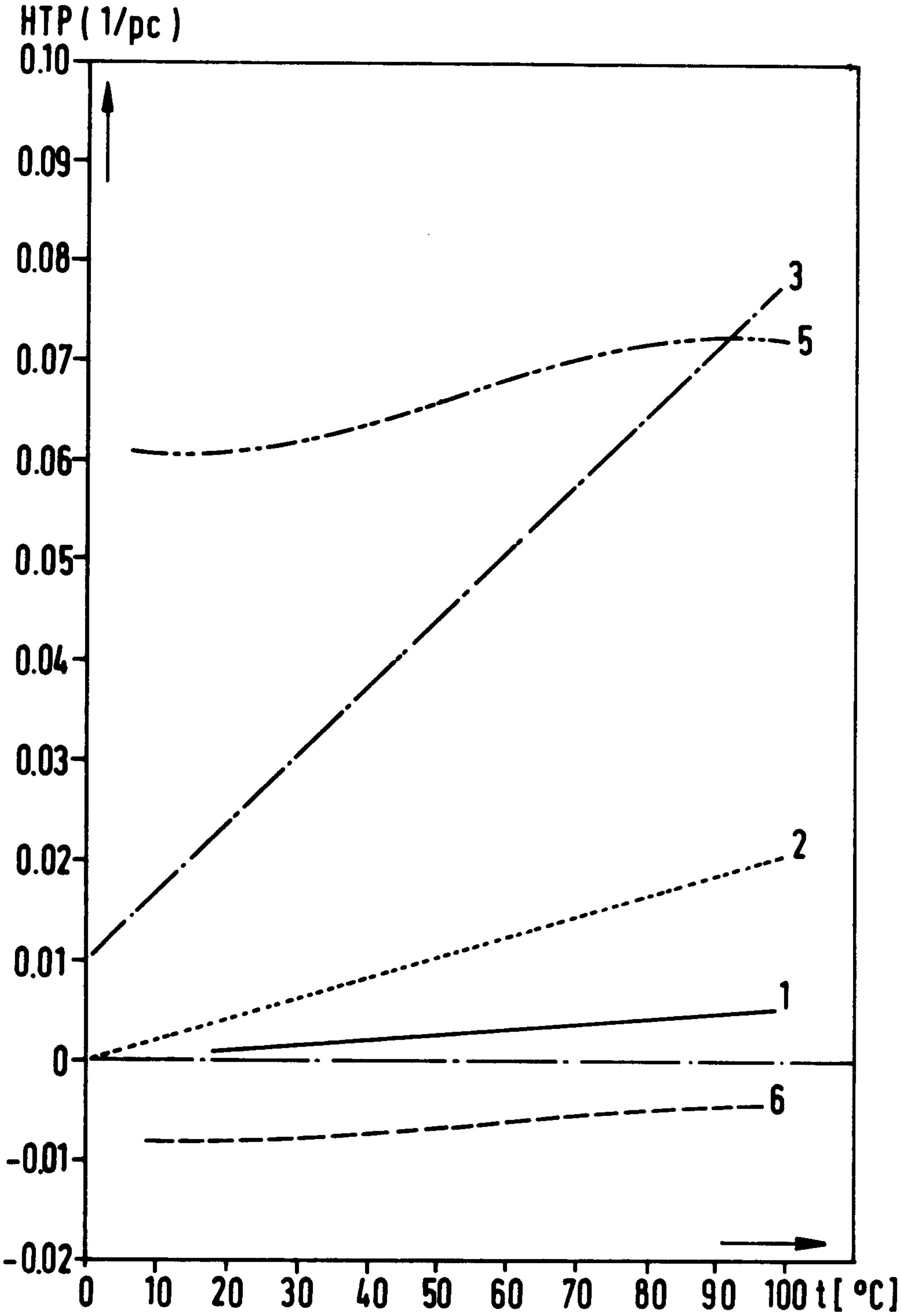

HTP ( 1/pc )
0.10
0.09
0.08
0.07
0.06
0.05
0.04
0.03
0.02
0.01
0
-0.01
-0.02
3
5
2
1
6
0
10
20
30
40
50
60
70
80
90
100 t [ °C ]